Europäisches Patentamt

European Patent Office

Office européen des brevets

(11) Veröffentlichungsnummer: **0 282 731 B1**

(12) # EUROPÄISCHE PATENTSCHRIFT

(45) Veröffentlichungstag der Patentschrift: 04.12.91

(51) Int. Cl.⁵: **B29C 47/08**

(21) Anmeldenummer: **88101935.0**

(22) Anmeldetag: **10.02.88**

(54) **Vorbereitungsstation für Vorformleisten an einem aufklappbaren Mehrfach-Strangpresskopf zum Herstellen von Kautschukprofilen für Laufstreifen von Autoreifen.**

(30) Priorität: **20.03.87 DE 3709248**

(43) Veröffentlichungstag der Anmeldung:
**21.09.88 Patentblatt 88/38**

(45) Bekanntmachung des Hinweises auf die
Patenterteilung:
**04.12.91 Patentblatt 91/49**

(84) Benannte Vertragsstaaten:
**AT BE DE FR GB IT SE**

(56) Entgegenhaltungen:
**DE-A- 3 521 643    DE-A- 3 629 096**
**DE-B- 1 127 852    DE-B- 1 152 084**
**GB-A- 2 083 401    US-A- 2 979 768**
**US-A- 3 240 046    US-A- 4 652 410**

**PATENT ABSTRACTS OF JAPAN, Band 10,**
**Nr. 204 (M-499)[2260], 17. Juli 1986; & JP-A-61**
**44 618 (YOKOHAMA RUBBER CO. LTD)**
**04-03-1986**

(73) Patentinhaber: **HERMANN BERSTORFF Ma-**
**schinenbau GmbH**
**An der Breiten Wiese 3/5**
**W-3000 Hannover 61(DE)**

(72) Erfinder: **Bellmer, Klaus, Dipl.-Ing.**
**Brandenburger Strasse 1**
**W-3003 Ronnenberg 3(DE)**

## Beschreibung

Die Erfindung betrifft eine Vorbereitungsstation für einen Strangpreßkopf der Gattung, wie im Oberbegriff des Anspruchs 1 beschrieben.

Für die Herstellung eines Laufstreifens für Autoreifen ist es erforderlich, drei oder mehr verschiedenartige Mischungen miteinander zu vereinen, nämlich der Laufflächenmischung, die aus hochabriebfestem Material besteht, der Schulterstreifenmischung, die aus sehr walkfähigem Material besteht, der sogenannten Untergummimischung, die als Grundlage für die Lauffläche dient und aus einer weicheren Mischung als die Lauffläche bestehen kann und der sogenannten Kissengummimischung, für eine gute Haftung an der Karkasse.

Es müssen also bis zu vier in ihrer Viskosität stark unterschiedliche Mischungen in einem Strangpreßkopf zu einem Laufstreifenprofil zusammengeführt werden, was hinsichtlich der Fließkanäle besondere Maßnahmen erfordert.

Aus der GB-OS 21 31 734 A ist eine Extruderanlage zum Herstellen von Flachprofilen aus zwei verschiedenartigen Mischungen bekannt. Der Strangpreßkopf der Extruderanlage ist in zwei übereinander angeordneten Ebenen geteilt. Das Mittelteil des Kopfes ist fest mit den Extrudern verbunden, während das Oberteil und das Unterteil verschwenkbar ausgebildet sind.

Die Verschwenkbarkeit der Kopfteile ist erforderlich, um die Fließkanaleinsätze des Kopfes austauschen oder reinigen zu können, wenn in einem oder allen Extrudern eine andere Kautschuk- oder Elastomermischung gefahren werden soll und um im Falle eines Profilwechsels auch Einsätze mit anderen Fließkanälen und andere Vorformleisten einzubauen, für einer angepaßten und optimalen Verlauf der Fließkanäle im Kopf.

In vielen Betrieben wird relativ häufig ein Profilstreifenwechsel vorgenommen, z.B. um Laufstreifen für unterschiedlich große PKW-bzw. LKW-Reifen oder Spezialreifen für Erdbewegungsmaschinen herzustellen.

Jeder Wechsel der Laufstreifenart hat zur Folge, daß sowohl die Fließkanaleinsätze als auch die Vorformleiste ausgewechselt werden müssen.

Die Auswechselung der Fließkanaleinsätze erfolgt, nachdem die verschwenkbaren Kopfteile hydraulisch hoch- und heruntergeklappt wurden, durch Herausfahren der Einsätze mittels Hydraulikzylinder, an deren Kolbenstangen die Einsätze befestigt sind, wie näher beschrieben in der US-PS 4,619,599.

Die an dem Austritt des Kopfes angeordneten Vorformleisten werden bisher manuell ausgebaut, mit einem Kran erfaßt und durch neue mit anderen Fließkanälen und Endprofilleisten ersetzt.

Aus der DE-AS 11 52 084 ist eine Metallstrangpresse bekannt mit einem Magazin für Preßmatrizen, die in einer horizontal oder vertikal drehbar ausgebildeten Trommel angeordnet sind.

Weiterhin ist aus der GB-OS 20 83 401 A eine Extrusionseinrichtung bekannt für die Ausformung von Laufstreifen, bei der nach Lösen von Knebelverschlüssen die Düsenlippen ausgetauscht werden können.

(Weiter S. 5, 6. Zeile von unten, der Ursprungsunterlagen)

Es ist die Aufgabe der Erfindung eine Einrichtung vorzuschlagen, mittels der die Vorformleisten sehr schnell ausgetauscht werden können, so daß ein Wechsel in der Herstellung der Laufstreifen binnen kürzester Zeit dargestellt werden kann.

Die Aufgabe wird gelöst durch die in dem kennzeichnenden Teil der Patentansprüche beschriebenen Merkmale.

Vorteilhafte Weiterbildungen des ersten Anspruchs werden in den Unteransprüchen beschrieben.

Durch die Ausbildung einer Vorbereitungsstation, mit mehreren beheizbaren Aufnahmekammern für Vorformleisten und Endprofilleisten, werden die Voraussetzungen für einen schnellen Wechsel der Vorformleisten geschaffen. Die Ausbildung von Auswurfeinrichtungen sowohl für die Vorformleiste selbst als auch für das Mundstück der Leiste, nämlich der Endprofilleiste gewährleisten ein schnelles Demontieren der Teile, an denen hochviskose Kautschukmischungen haften. Ohne Auswurfeinrichtungen würde ein Auswechselvorgang sehr viel Kraft erfordern.

Die Vorbereitungsstation ist gemäß Anspruch 2 als Karussellstation ausgebildet, wodurch sehr kurze Verfahrwege für die Vorformleisten verwirklicht werden, die ein schnelles Auswechseln der Vorformleiste begünstigen.

Aber auch eine Ausbildung der Vorbereitungsstation als senkrecht oder waagerecht arbeitende Regalstation, gemäß Anspruch 3, verwirklicht kurze Verfahrwege.

Die Beheizung der Vorbereitungsstation, gemäß Anspruch 4, trägt dazu bei, die Arbeitsunterbrechung so kurz wie möglich zu halten und verhindert insbesondere, daß Ausschußlaufstreifen hergestellt werden. Nicht vorgeheizte Vorformleisten müßten sich im Mehrfachkopf durch das zu extrudierende Material aufheizen, wodurch bis zum Erreichen der Betriebstemperatur die Außenflächen des Profilbandes niedrigere Temperaturen aufweisen und somit auch eine niedrigere Viskosität haben. Die Folgen davon sind unterschiedliche Fließgescnwindigkeiten innerhalb des Profilquerschnittes, die zu Profilschwächungen führen.

Nachdem die ausgewechselte Vorformleiste durch die Vorbereitungsstation aufgenommen worden ist, wird mittels einer ersten Auswurfeinrichtung, wie in Anspruch 5 erwähnt, die Endprofilleiste von der Vorformleiste getrennt und ausgestoßen.

Danach wird die Vorformleiste selbst in eine Auswechselposition gefahren, in der dann durch eine zweite Auswurfeinrichtung, gemäß Anspruch 6, die Spleißleiste entfernt, gereinigt und ggf. durch eine andere ersetzt wird.

Ausführungsbeispiele der Erfindung werden in den beigefügten Zeichnungen dargestellt. Das bevorzugte Ausführungsbeispiel wird in den Figuren 3 - 6 dargestellt.

Es zeigen:

Fig. 1    einen Längsschnitt durch eine schematisiert dargestellte Anlage zum Herstellen von Laufstreifen.

Fig. 2    ein mit II gekennzeichnetes Detail in Fig. 1.

Fig. 3    eine Draufsicht auf eine Vorbereitungsstation für die Vorformleisten.

Fig. 4    einen Querschnitt gemäß der Linie IV-IV in Fig. 3.

Fig. 5    einen Querschnitt gemäß der Linie V-V in Fig. 4 und Fig. 8.

Fig. 6    einen Querschnitt gemäß der Linie VI-VI in Fig. 4 und 8.

Fig. 7    einen Längsschnitt durch eine Frontansicht gemäß der Linie VII-VII in Fig. 3.

Fig. 8    eine Draufsicht auf einen Querschnitt einer weiteren Ausführungsform einer Vorbereitungsstation.

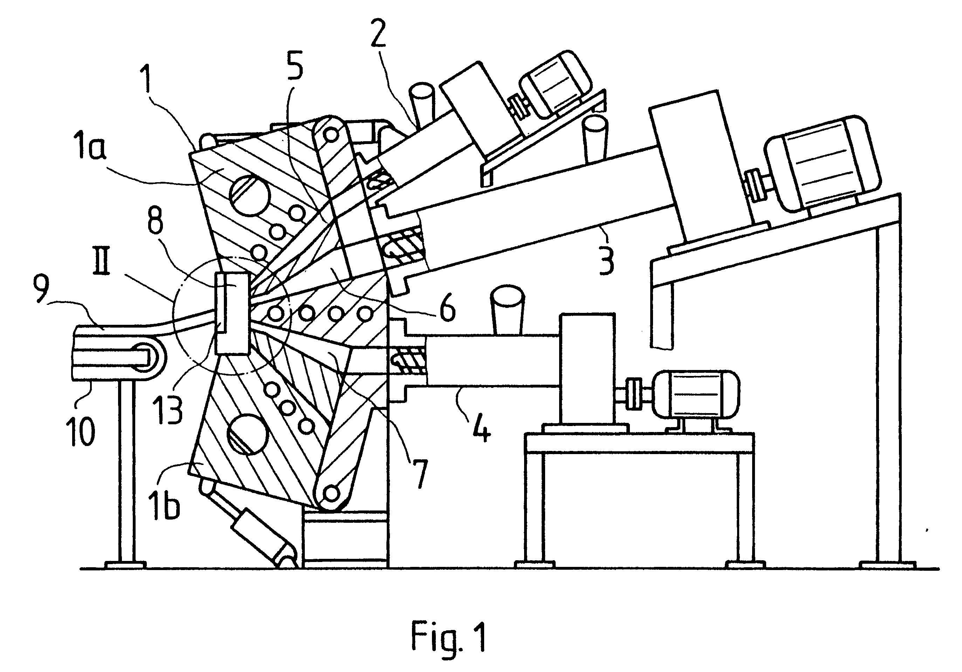

Die in Fig. 1 im Längsschnitt schematisiert dargestellte Anlage für die Herstellung von Laufstreifen weist einen Mehrfachkopf 1 auf, der mittels der Extruder 2, 3 und 4 mit verschiedenen Kautschukmischungen gespeist wird.

Die jeweils aufbereitete Gummimischung wird durch die Fließkanäle 5, 6 und 7, in der nicht gezeigte Fließkanaleinsätze vorhanden sind, der Vorformleiste 8 zugeführt und zu einem Laufstreifen 9 vereinigt, der von einem Transportband 10 aufgenommen und einer weiterverarbeitenden Einrichtung, wie z.B. einer Schrumpfstrecke, einer Kühlstrecke oder einer Ablängeinrichtung, zugeführt wird.

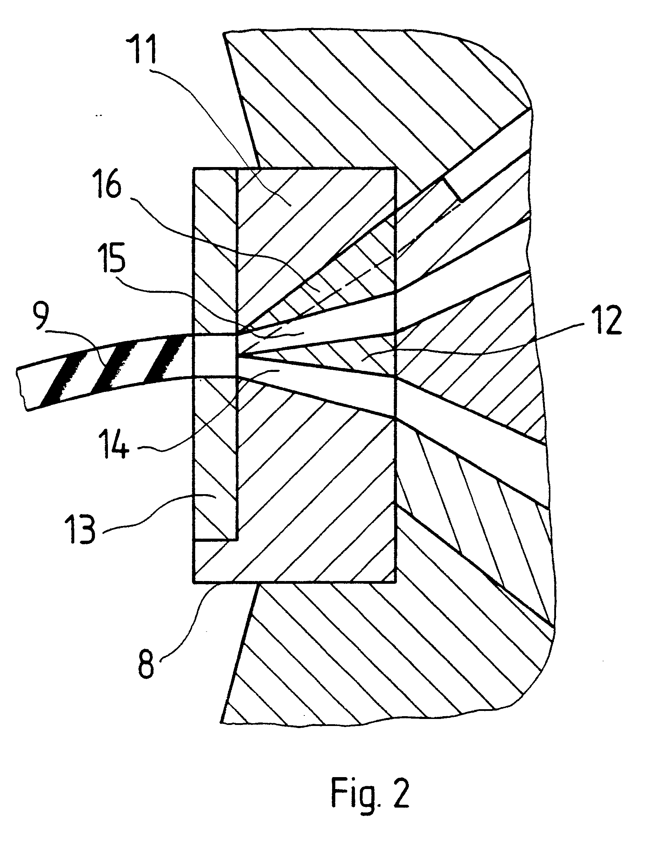

Die Vorformleiste 8 wird in Fig. 2 im Detail dargestellt. In dem Gehäuse 11 der Vorformleiste 8 befindet sich die Spleißleiste 12 und an der Austrittsseite die Endprofilleiste 13, die dem extrudierten Laufstreifen 9 seine endgültige äußere Form verleiht.

In der Spleißleiste 12 sind die Spleißkanäle 14, 15 und 16 eingearbeitet für die Zusammenführung der in ihrer Viskosität und ihrer Zuzammensetzung unterschiedlichen Kautschukmischungen zu dem extrudierten Laufstreifen 9.

Jeder Wechsel der Laufstreifenart oder -größe erfordert auch einen Wechsel der gesamten Vorformleiste 8, der bisher durchgeführt wurde, durch Öffnen des Mehrfachkopfes 1. Zu diesem Zweck wurde die obere Hälfte 1a mittels eines Hydraulikzylinders hochgeschwenkt. Dann wird die Vorformleiste mit einem Kran angehoben, herausgenommen und durch eine neue ersetzt, die andere Spleißkanäle und eine andere Endprofilleiste aufweist.

Um diesen Auswechselvorgang durchführen zu können, war eine lange Produktionsunterbrechung unerläßlich. Da in jeder Arbeitsschicht ein mehrfacher Wechsel erforderlich werden kann, wird viel Zeit für den Auswechselvorgang und das erneute Einfahren der Anlage gebraucht.

Gemäß vorliegender Erfindung wird eine Vorbereitungsstation vorgesehen, die mehrere Aufnahmekammern für Vorformleisten aufweist, die seitlich neben dem Mehrfachkopf angeordnet ist, die mit Heizeinrichtungen für die Vorformleisten ausgebildet ist und die eine erste Auswurfeinrichtung für die Endprofilleiste und eine zweite Auswurfeinrichtung für die Spleißleiste aufweist.

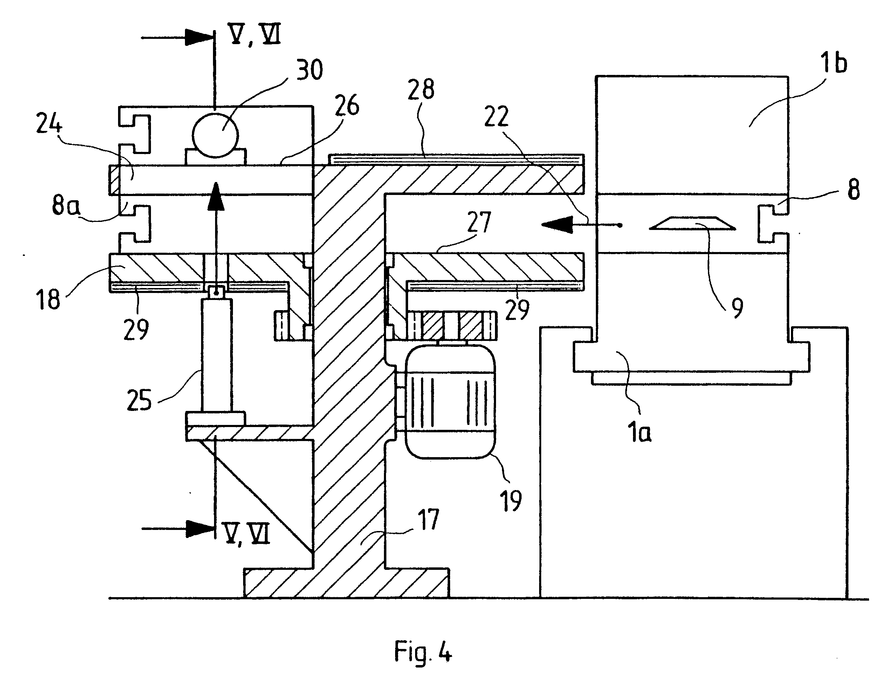

In den Figuren 3 und 4 wird ein Ausführungsbeispiel einer Vorbereitungsstation gezeigt, die als Karussellstation ausgebildet ist.

An einem Ständer 17 ist ein Karussell 18 gelagert, das mit dem Motor 19 jeweils in eine neue Position gefahren werden kann (siehe Pfeil 20).

In dem gezeigten Ausführungsbeispiel hat das Karussell 18 sechs Aufnahmekammern 27 für unterschiedlich gestaltete Vorformleisten 8.

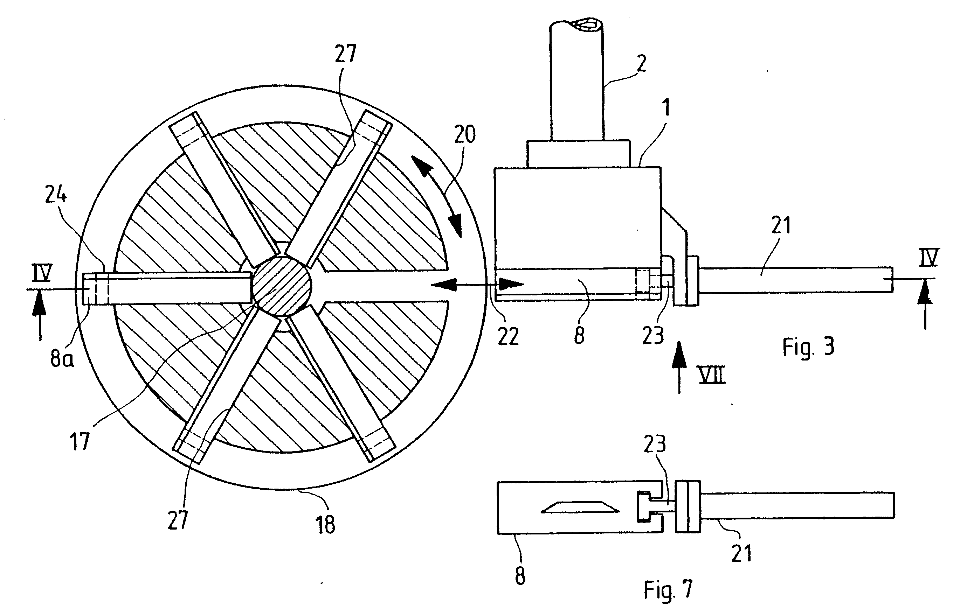

Durch den Hydraulikzylinder 21 wird die Vorformleiste 8 aus ihrer in Fig. 1, 3, 4 und 7 gezeigten Position zwischen den Kopfhälften 1a und 1b auf das Karussell 18 (Pfeil 22 in Fig. 3 und 4) verfahren und von der Kolbenstange 23, die beispielsweise eine Schwalbenschwanzführung aufweist, gelöst.

Dann wird das Karussell 18 mittels des Motors 19 weitergedreht, bis eine gewünschte neue Vorformleiste vor der Kolbenstange 23 des Hydraulikzylinders 21 positioniert ist.

Nachdem die Verbindung zwischen der Kolbenstange 23 und der neuen Vorformleiste 8 hergestellt worden ist, zieht der Hydraulikzylinder 21 die neue Vorformleiste in die Arbeitsposition zwischen den Kopfhälften 1a und 1b.

Es ist offensichtlich, daß für einen derartigen Auswechselvorgang nur wenig Zeit benötigt wird.

Die alte Vorformleiste 8a wird dann mittels des Karussells 18 in eine Reinigungsposition 24 gefahren, in der dann zunächst die Endprofilleiste 13 mittels des Hydraulikzylinders 25 nach oben ausgestoßen und entfernt wird. Dann fährt nach Einziehen des Kolbenstange 25a das Karussell 18 weiter bis das Gehäuse 11 der Vorformleiste über der Auswurfkolbenstange 25a positioniert ist. Danach wird mittels der Auswurfkolbenstange 25 a des Hydraulikzylinders 25 die Vorformleiste in die Entnahmeposition 26 angehoben.

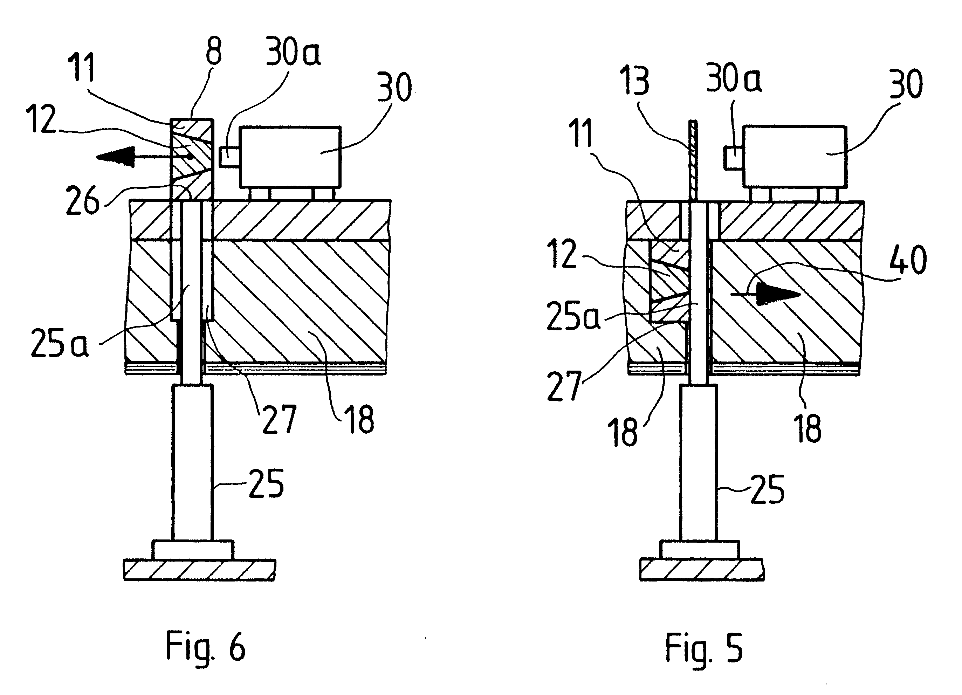

In dieser Position wird danach mittels des Hydraulikzylinders 30, der eine Auswurfkolbenstange 30a aufweist (Fig. 5 und 6), die Spleißleiste 12 aus dem Gehäuse 11 der Vorformleiste 8 entfernt, um eine Reinigung vornehmen zu können, oder auch um eine, andere Fließkanäle 14, 15 und 16 aufweisende Spleißleiste 12 in das Gehäuse 11 einsetzen zu können. Der Einsatz von Hydraulikzylindern 25 und 30 erleichtert den Reinigungs-und Auswechselvorgang sehr, weil die in der Vorformleiste 8 verbleibenden Kautschukreste sehr zäh und klebrig sind.

Nach dem Einsetzen einer neuen Spleißleiste 12 in das Gehäuse 11 wird die Vorformleiste 8a wieder in eine in Fig. 5 gezeigte Aufnahmekammer 27 gefahren, wo sie zu einer neuen Verwendung zur Verfügung steht.

Die Vorformleisten 8 werden in dem Karussell 18 durch die Heizeinrichtung 28 und 29 auf eine Temperatur gebracht und gehalten, die in etwa der Temperatur der sich in dem Kopf 1 befindlichen Vorformleiste in ihrer Arbeitsstellung entspricht. Durch diese Maßnahme wird sichergestellt, daß keine Störungen auftreten durch eine kalte Vorformleiste, an der das Material sehr stark haften würde und wodurch die Profiltemperatur und somit die Fließgeschwindigkeit aufgrund der Viskositätsänderung beeinträchtigt wird.

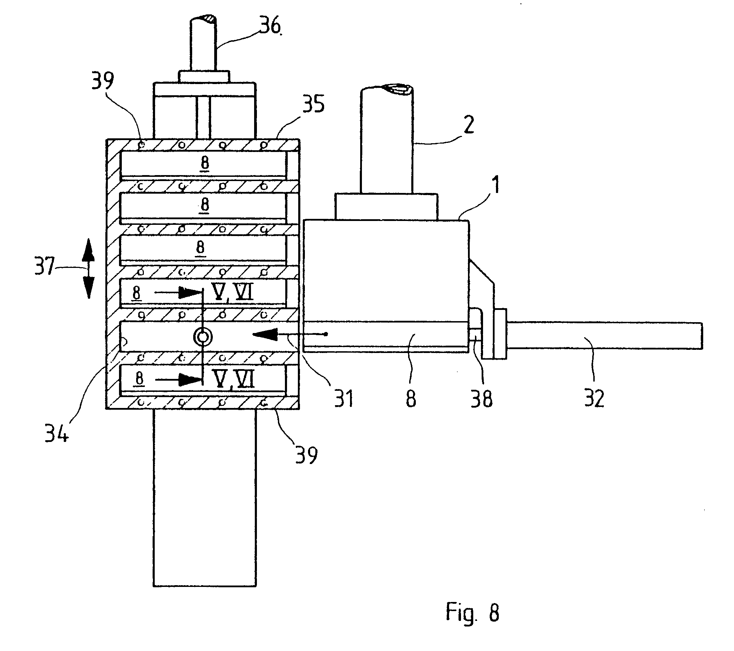

In Fig. 8 wird als Draufsicht analog zur Draufsicht in Fig. 3 eine weitere Ausführungsform einer Vorbereitungsstation für die Auswechselung von Vorformleisten gezeigt.

In diesem Beispiel ist die Vorbereitungsstation als Regalstation ausgebildet.

Wie durch Pfeil 31 angedeutet, wird aus dem Mehrfachkopf 1 mittels des Hydraulikzylinders 32 eine Vorformleiste 8 in eine leere Kammer 34 der Regalstation 35 gefahren.

Danach wird die Regalstation 35, die in nichtgezeigten Führungen läuft, mittels des Hydraulikzylinders 36 in Richtung des Doppelfeiles 37 waagerecht verfahren, bis die gewünschte neue Vorformleiste 8 sich vor der Kolbenstange 38 befindet, mit der sie mittels einer Schwalbenschwanzführung verbunden und in den Kopf 1 gezogen wird. Durch die in der Regalstation eingebrachten Temperierkanäle 39 werden die darin abgelegten Vorformleisten 8 auf die jeweilige Betriebstemperatur gebracht.

Die alte Vorformleiste wird aus der Regalstation 35 durch einen Hydraulikzylinder, wie gezeigt in den Fig. 5 und 6, entfernt.

Zu diesem Zweck wird zunächst mittels des Hydraulikzylinders 25 die Endprofilleiste 13 mittels der Auswurfkolbenstange 25a aus der Vorformleiste nach oben herausgestoßen und dann entfernt. Danach fährt die Auswurfkolbenstange 25a wieder in den Hydraulikzylinder 25 hinein und die Regalstation wird geringfügig weitergefahren in Richtung des Pfeiles 40, und zwar so weit, bis sie die Vorformleiste 11 oberhalb des Hydraulikzylinders positioniert ist. Durch ein erneutes Herausfahren der Auswurfkolbenstange 25a wird dann das gesamte Gehäuse 11 der Vorformleiste 8 in die in Fig. 6 gezeigte Position gefahren.

Anschließend wird dann mittels des Hydraulikzylinders 30 aus dem Gehäuse 11 die Spleißleiste 12 herausgedrückt und gereinigt oder durch eine Spleißleiste mit anderen Spleißkanälen ersetzt.

Der Einsetzvorgang der neuen Spleißleiste erfolgt dann in umgekehrter Reihenfolge.

Die in den Fig. 5 und 6 gezeigte Einrichtung zum Herausdrücken der Vorformleiste aus einer Vorbereitungsstation kann sowohl bei der Ausführungsform mit dem Karussell, wie gezeigt in Fig. 3 und 4, als auch bei der Ausführungsform mit der Regalstation 35 eingesetzt werden.

**Patentansprüche**

1. Vorbereitungsstation für Vorformleisten (8) an einem aufklappbaren Mehrfach-Strangpreßkopf (1) zum Herstellen von Kautschukprofilen für Laufstreifen (9) von Autoreifen, bei dem der Strangpreßkopf (1) aus einem feststehenden Mittelteil und einem aufk appbaren Ober- und Unterteil (1a, 1b) besteht, zwischen denen auswechselbare Fließkanaleinsätze angeordnet sind und bei dem am Kopfaustritt eine auswechselbare Vorformleiste (8) angeordnet ist,

**dadurch gekennzeichnet,**

daß die Vorbereitungsstation mehrere Aufnahmekammern (27, 34) aufweist,
daß die Vorbereitungsstation mit einer Heizeinrichtung (28, 39) für die Aufnahmekammer (27, 34) ausgebildet ist, und
daß die Vorbereitungsstation Auswurfeinrichtungen (25, 25a, 30, 30a) für die Vorformleiste (8, 8a), die Endprofilleiste (13) und für die Spleißleiste (12) aufweist.

2. Vorbereitungsstation nach Anspruch 1,

**dadurch gekennzeichnet,**

daß die Vorbereitungsstation als Karussellstation (17, 18, 19) ausgebildet ist.

3. Vorbereichtungsstation nach Anspruch 1,

**dadurch gekennzeichnet,**

daß die Vorbereitungsstation als senkrecht oder waagerecht stehende Regalstation (35, 36, 39) ausgebildet ist.

4. Vorbereitungsstation nach Anspruch 1,

**dadurch gekennzeichnet,**

daß die Heizeinrichtung (28, 39) für die Vorbereitungsstation gebildet wird durch in der Kammerwandung der Aufnahmekammern (27, 34) eingebrachte Temperierbohrungen, an die Umlauftempiergeräte anschließbar sind.

5. Vorbereitungsstation nach Anspruch 1,

**dadurch gekennzeichnet,**

daß die Auswurfeinrichtung für die Vorformleiste (8, 8a) und die Endprofilleiste (13) gebildet wird durch einen Hydraulikzylinder (25) mit einer herausfahrbaren Auswurfkolbenstange (25a).

6. Vorbereitungsstation nach Anspruch 1,

**dadurch gekennzeichnet,**

daß die Auswurfeinrichtung für die Spleißleiste (12) gebildet wird durch einen Hydraulikzylinder (30) mit einer Auswurfkolbenstange (30a).

## Claims

1. Preparatory station for pre-forming bars (8) for use in a hinged multiple extrusion head (1) for producing rubber profiles for tread strips (9) of vehicle tyres, wherein the extrusion head (1) comprises a fixed central portion and hinged upper and lower portions (1a, 1b), between which portions interchangeable flow channel inserts are disposed, and wherein a replaceable pre-forming bar (8) is disposed at the outlet of the head, characterised in that the preparatory station comprises a plurality of accommodation chambers (27, 34), in that the preparatory station is provided with a means (28, 39) for heating the accommodation chambers (27, 34), and in that the preparatory station comprises means (25, 25a, 30, 30a) for ejecting the pre-forming bar (8, 8a), the final profile bar (13) and the splicing bar (12).

2. Preparatory station according to claim 1, characterised in that the preparatory station is in the form of a carrousel station (17, 18, 19).

3. Preparatory station according to claim 1,

characterised in that the preparatory station is in the form of a vertically or horizontally extending stack station (35, 36, 39).

4. Preparatory station according to claim 1, characterised in that the means (28, 39) for heating the preparatory station is formed by temperature-controlling bores provided in the chamber wall of the accommodation chambers (27, 34), rotational temperature-controlling means being communicatable with said bores.

5. Preparatory station according to claim 1, characterised in that the means for ejecting the pre-forming bar (8, 8a) and the final profile bar (13) is formed by a hydraulic piston and cylinder arrangement (25) provided with an extensible ejecting piston rod (25a).

6. Preparatory station according to claim 1, characterised in that the means for electing the splicing bar (12) is formed by a hydraulic piston and cylinder arrangement (30) provided with an ejecting piston rod (30a).

## Revendications

1. Station de préparation d'éléments de préforme (8) d'une tête d'extrudeuse multiple relevable (1) pour la fabrication de profilés en caoutchouc pour bandes de roulement (9) de pneus d'automobiles, dans laquelle la tête d'extrudeuse (1) comprend une pièce médiane fixe et une partie supérieure et inférieure amovibles (1a, 1b) entre lesquelles on dispose des inserts de canaux d'écoulement échangeables et dans laquelle on dispose à la sortie de tête un élément de préforme échangeable (8), caractérisée en ce que la station de préparation comprend plusieurs chambres de réception (27, 34), que la station de préparation comprend un dispositif de chauffage (28, 39) des chambres de réception (27, 34), et que la station de préparation présente des dispositifs d'éjection (25, 25a, 30, 30a) pour les éléments de préforme (8, 8a), l'élément de profil final (13) et l'élément de jonction (12).

2. Station de préparation selon la revendication 1, caractérisée en ce que la station de préparation est en forme de station à carrousel (17, 18, 19).

3. Station de préparation selon la revendication 1, caractérisée en ce que la station de préparation est constituée en station à rayons horizontale ou verticale (35, 36,

EP 0 282 731 B1

39).

4. Station de préparation selon la revendication 1, caractérisée en ce qu'on réalise le dispositif de chauffage (28, 39),grâce à des trous de thermorégulation implantés dans la paroi de chambre des chambres de réception (27, 34), et qu'on peut les brancher sur des appareils de thermorégulation à circulation.

5. Station de préparation selon la revendication 1, caractérisée en ce qu'on réalise le dispositif d'éjection de l'élément de préforme (8, 8a) et de l'élément de profil final (13) avec un vérin hydraulique (25) et une tige de piston associée (25a) d'éjection pouvant être sortie.

6. Station de préparation selon la revendication 1, caractérisée en ce qu'
on réalise le dispositif d'éjection de l'élément de jonction (12) avec un vérin hydraulique (30) et une tige de piston associée d'éjection (30a).

Fig. 1

EP 0 282 731 B1

Fig. 2

Fig. 4

EP 0 282 731 B1

Fig. 6

Fig. 5

EP 0 282 731 B1

Fig. 3

Fig. 7

EP 0 282 731 B1

Fig. 8